(19) Europäisches Patentamt / European Patent Office / Office européen des brevets

(11) **EP 1 272 684 B1**

(12) **FASCICULE DE BREVET EUROPEEN**

(45) Date de publication et mention
de la délivrance du brevet:
**30.06.2010   Bulletin 2010/26**

(51) Int Cl.:
***C23C 18/16*** *(2006.01)*

(21) Numéro de dépôt: **01921427.9**

(86) Numéro de dépôt international:
**PCT/FR2001/000906**

(22) Date de dépôt: **26.03.2001**

(87) Numéro de publication internationale:
**WO 2001/073163 (04.10.2001 Gazette 2001/40)**

(54) **PROCEDE POUR FORMER SUR UN SUBSTRAT METALLIQUE UN REVETEMENT METALLIQUE PROTECTEUR EXEMPT DE SOUFRE**

VERFAHREN ZUR HERSTELLUNG EINER SCHWEFELFREIEN SCHUTZBESCHICHTUNG AUF EINEM METALLISCHEN SUBSTRAT

METHOD FOR FORMING ON A METAL SUBSTRATE A PROTECTIVE SULPHUR-FREE METAL COATING

(84) Etats contractants désignés:
**AT BE CH CY DE DK ES FI FR GB GR IE IT LI LU MC NL PT SE TR**

(30) Priorité:  **29.03.2000   FR 0003975**

(43) Date de publication de la demande:
**08.01.2003   Bulletin 2003/02**

(73) Titulaire: **ONERA (Office National d'Etudes et de Recherches Aérospatiales) 92320 Châtillon (FR)**

(72) Inventeurs:
• **GIRARD, Benoît**
  **F-33600 Pessac (FR)**
• **BACOS, Marie-Pierre**
  **F-92160 Antony (FR)**
• **BERGER, Eric**
  **F-64000 PAU (FR)**
• **JOSSO, Pierre**
  **F-92300 Issy Les Moulineaux (FR)**

(74) Mandataire: **Rousset, Jean-Claude et al Cabinet Netter 36, avenue Hoche 75008 Paris (FR)**

(56) Documents cités:
• **PATENT ABSTRACTS OF JAPAN vol. 014, no. 057 (C-0684), 2 février 1990 (1990-02-02) & JP 01 283377 A (BROTHER IND LTD), 14 novembre 1989 (1989-11-14)**

Remarques:
Le dossier contient des informations techniques présentées postérieurement au dépôt de la demande et ne figurant pas dans le présent fascicule.

**EP 1 272 684 B1**

**Description**

L'invention concerne un procédé pour former un revêtement sur un substrat métallique, notamment en vue de protéger le substrat contre la corrosion et/ou l'oxydation aux températures élevées.

Il est connu de protéger contre la corrosion et/ou l'oxydation des pièces métalliques travaillant à des températures élevées, notamment des aubes de turbines aéronautiques, par différents revêtements obtenus par diffusion (essentiellement à base d'aluminiure de nickel β-NiAl, éventuellement modifiés par des éléments additionnels). Ces revêtements présentent de nombreux avantages mais ils sont limités en composition. Pour certaines applications le revêtement "idéal" peut avoir une composition chimique impossible à obtenir par diffusion. C'est pourquoi la projection d'alliages tels que ceux désignés par la formule qualitative MCrAlY (avec M = Ni et/ou Co et/ou Fe) a été étudiée au moyen de techniques de dépôt physique. Ces techniques permettent d'ajouter dans le dépôt à l'état de traces (jusqu'à 2 %) des éléments dits "actifs" tels que l'yttrium, le hafnium, le tantale et le zirconium.

Un exemple typique d'un revêtement de MCrAlY est constitué par un alliage à base de nickel contenant 20 % en poids de cobalt, permettant d'éviter la réaction:

$$\gamma\text{-Ni} + \beta\text{-NiAl} \rightarrow \gamma'\text{-Ni}_3\text{Al} + \alpha\text{-Cr},$$

possible dès 1 000 °C, 20 à 25 % de chrome pour le renforcement de la résistance à la corrosion de type I, 6 à 8 % d'aluminium (élément aluminoformeur) et environ 0,5 % d'yttrium, qui renforce l'adhérence de la couche d'alumine à l'alliage aluminoformeur. Sa microstructure générale est celle d'un alliage biphasé contenant des précipités de β-NiAl (phase aluminoformeuse) dans une matrice γ. Selon les conditions d'utilisation, d'autres éléments peuvent être ajoutés, et/ou les concentrations ci-dessus modifiées. Par exemple, si ce revêtement est destiné à lutter contre la corrosion à chaud de type II en présence de vanadium, la concentration en chrome peut dépasser 30 % en masse. De nombreuses compositions de MCrAlY sont disponibles commercialement, les plus utilisées étant celles connues sous les dénominations AMDRY 997 (NiCoCrAlYTa) et AMDRY 995 (CoNiCrAlYTa).

Un aspect particulièrement intéressant de ces alliages protecteurs est la possibilité d'y ajouter des éléments actifs. L'addition, en faible quantité (de l'ordre de 1 % atomique ou moins), d'éléments tels que Y et Hf améliore de façon très nette l'adhésion de couches de $Cr_2O_3$ ou d'$Al_2O_3$ sur les alliages en question. De ce fait, l'effet protecteur de la couche d'oxyde est conservé sur des durées importantes, notamment dans des conditions de cyclage thermique.

Parmi les techniques de dépôt physique évoquées ci-dessus pour l'obtention de revêtements MCrAlY on peut citer notamment la projection à chaud et plus particulièrement la projection plasma, dans laquelle le matériau à déposer est introduit, au moyen d'un gaz porteur, dans le jet d'une torche à plasma sous forme de grains de poudre de 20 à 100 μm de diamètre. Après fusion, les gouttelettes du matériau devenu liquide sont projetées à grande vitesse sur la surface du substrat. La flamme-plasma résulte de la détente à grande vitesse dans une anode-tuyère d'un gaz plasmagène (Ar + 10 % $H_2$, par exemple) ionisé lors de son passage dans une chambre à arc. On peut ainsi déposer à la surface d'un substrat quelconque tout matériau disponible en poudre pouvant être fondu sans décomposition ni évaporation. Cette projection peut se faire soit à la pression atmosphérique (à l'air ou en atmosphère neutre), soit sous pression réduite. Dans tous les cas le revêtement s'élabore à grande vitesse, typiquement 100 μm/min. Cette technique de dépôt est fortement directionnelle et donc difficile à mettre en oeuvre pour des pièces de forme complexe.

C'est essentiellement la projection plasma sous pression réduite qui est utilisée pour le dépôt d'alliages de type MCrAlY. Le dispositif de projection est installé dans une enceinte dans laquelle on pratique une forte dépression (P = 5 kPa). Ceci permet d'éviter l'oxydation des particules d'alliage projetées, d'augmenter la vitesse des gaz dans le jet plasma et d'allonger la flamme ce qui augmente la vitesse d'impact des particules fondues et, par voie de conséquence, diminue la porosité. Enfin, il faut noter que cette technique autorise un décapage ionique initial en polarisant la surface du substrat ce qui augmente l'adhésion du revêtement sur le substrat. Les dépôts obtenus sont adhérents et faiblement tendus et peuvent être très épais (quelque millimètres). Après projection les revêtements MCrAlY sont diffusés lors d'un traitement thermique sous vide. Ils sont cependant rugueux et nécessitent un usinage post-opératoire suivi d'une tribo-finition.

On peut mentionner également une technique de projection à haute vitesse à la flamme réalisée en faisant réagir un carburant (hydrocarbure et/ou hydrogène) et un comburant (air reconstitué par mélange azote + oxygène, ou oxygène pur).

Une autre catégorie de techniques de dépôt physique est celle des dépôts physiques en phase vapeur, qui comprennent la pulvérisation cathodique triode et l'évaporation sous faisceau d'électrons.

Pour la pulvérisation cathodique triode, un système à trois électrodes polarisées à quelques kilovolts placé dans une enceinte où règne un vide d'environ $10^{-2}$ Pa permet de déposer à une vitesse comprise entre 5 et 25 μm/h des alliages MCrAlY extrêmement adhérents, non poreux et moins directionnels que dans le cas de la projection plasma.

Pour l'évaporation sous faisceau d'électrons, dans une enceinte maintenue sous un vide meilleur que $10^{-4}$ Pa, un faisceau d'électrons est focalisé à la surface du matériau à déposer contenu dans un creuset métallique refroidi. Un système d'approvisionnement en continu du lingot permet de conserver constant le niveau du bain liquide et de maintenir les conditions de dépôt stationnaires. Les vapeurs émises se condensent sur le substrat placé en regard du bain liquide. Ce substrat est maintenu à température suffisamment élevée pour minimiser les défauts inhérents à la croissance colonnaire du dépôt. Ces défauts sont par la suite éliminés par un grenaillage suivi d'un traitement thermique de diffusion et d'élimination des tensions. Les vitesses de dépôt peuvent atteindre jusqu'à 25 $\mu$m/min. Cette technique est décrite dans US 5 698 273 A. Elle a été essentiellement développée pour le dépôt de MCrAlY sur des aubes de turbomachines. Son développement est cependant limité du fait de son coût d'investissement et d'exploitation. De plus, ce procédé très directionnel ne permet pas d'obtenir aisément certaines compositions de revêtement (cas des alliages comprenant des éléments à tension de vapeur très différente).

En revanche, il permet de réaliser l'ensemble revêtement protecteur + barrière thermique (zircone partiellement stabilisée à l'yttrine $ZrO_2$ + 8 % $Y_2O_3$), cette dernière possédant de meilleures propriétés mécaniques et une meilleure tenue aux chocs thermiques que celle obtenue par projection plasma.

Le dépôt électrolytique de l'alliage MCrAlY(Ta) est impossible car il supposerait le dépôt conjoint en milieu aqueux (l'eau n'est plus stable au delà de -1 V par rapport à l'électrode normale à hydrogène) de nickel (E0 = -0,44 V), de cobalt (E0 = -0,28 V), de chrome (E0 = -0,744 V), d'aluminium (E0 = -1,662 V), d'yttrium (E0 = -2,372 V) et le cas échéant de tantale (E0 = -0,750 V). Pour obtenir un dépôt de MCrAlY par électrochimie il faudra donc réaliser un dépôt composite comprenant d'une part du nickel et/ou du cobalt, d'autre part des particules de CrAlY, et ensuite faire diffuser l'ensemble dépôt électrolytique + particules + substrat à haute température (typiquement 2 heures à 1100 °C). Des exemples de mise en oeuvre sont décrits dans US 4 305 792 A, US 4 810 334 A et 5 037 513 A.

À défaut de dépôt électrolytique, il est possible de faire migrer des particules dans un champ électrique important (typiquement 100 V). Le milieu de dépôt choisi doit avoir une constante diélectrique élevée et présenter une grande stabilité électrochimique. C'est l'électrophorèse. Couramment utilisée pour la peinture des automobiles, cette technique permet le dépôt de particules métalliques ou non. Cependant le dépôt obtenu est poreux, friable et peu adhérent. Il doit alors être consolidé par un second dépôt faisant appel à un procédé classique.

Il est possible de réaliser un dépôt chimique, par exemple de nickel, de cobalt, de nickel-cobalt, de nickel-bore, de nickel-phosphore, de palladium, de platine ou de palladiumplatine par la voie chimique autocatalytique (c'est le dépôt qui catalyse la réaction de réduction). La formation du dépôt est due à l'oxydation d'une molécule appelée "réducteur" et à la réduction d'un cation métallique en solution appelé "métal à déposer" ou "sel électroactif". Ce type de dépôt est connu depuis les travaux de Brenner en 1946 [A. Brenner & G. Ridell, Proc. Amer. Electroplaters Soc. 33, 16 (1946); 34, 156 (1947)] pour les dépôts de nickel-phosphore ou ceux des chercheurs des sociétés Dupont-de-Nemours aux États-Unis d'Amérique et Bayer en Allemagne dans le cas du nickel-bore. Différentes sociétés commerciales ont depuis développé le concept et commercialisent différents bains pour le dépôt chimique autocatalytique de nickel et/ou de cobalt: Bayer, Shipley, Frappaz Imaza, Apticote, Schlötter, etc. Tous ces bains commerciaux fonctionnent sur le principe réducteur/métal à déposer. Ils ont aussi un autre point commun: la stabilité (c'est à dire l'absence de réaction de dépôt ailleurs que sur la surface du substrat à recouvrir) y est assurée par deux molécules distinctes: un stabilisant primaire (en règle général du pentoxyde d'arsenic $As_2O_5$) destiné à éviter une décomposition spontanée du bain et un stabilisant secondaire (acétate de plomb $CH_3CO_2Pb$; sulfate de thallium $TlSO_4$; acide thiodiglycolique, etc.). Enfin, selon la nature des réducteurs utilisés, le dépôt obtenu contiendra du phosphore (hypophosphite de sodium) ou du bore (borohydrure de sodium, diméthylaminoborane, etc.). Les travaux de Josso et al. entre 1985 et 1989 ont montré qu'il était aussi possible de déposer par la voie chimique autocatalytique d'autres métaux que le nickel et/ou le cobalt, à savoir le platine et/ou le palladium.

Il a été proposé de réaliser un dépôt chimique d'au moins un métal, notamment de nickel et/ou de cobalt, à partir d'ions de ce métal présents dans un bain, avec inclusion dans le dépôt de particules métalliques, notamment d'un alliage de type CrAlY ou MCrAlY, présentes en suspension dans le bain. Il paraît particulièrement avantageux à cet égard d'utiliser un bain autocatalytique tel que décrit dans FR 2 590 595 A, contenant de l'hydroxyde de nickel-II tri (éthylènediamine) et/ou de l'hydroxyde de cobalt-II tri(éthylènediamine), de l'hydrazine comme réducteur et au moins un stabilisant choisi de préférence parmi le pentoxyde d'arsenic et l'imidazole, l'éthylènediamine jouant le rôle de complexant. En effet, de tels bains sont exempts de composés soufrés, et évitent par conséquent la présence de soufre dans le dépôt. Or, il est admis que le soufre présent à l'état de trace dans les alliages ou dans les revêtements est une des causes du dépérissement prématuré des protections contre l'oxydation et la corrosion à chaud. De même, ces bains sont exempts de composés du bore, du phosphore et du silicium, et de brillanteurs et de mouillants contenant du carbone, ce qui évite la présence dans le revêtement de ces éléments, qui pourraient constituer des impuretés gênantes. Toutefois, la mise en suspension de la poudre à co-déposer tend à provoquer une déstabilisation du bain de dépôt. Bien qu'une telle déstabilisation puisse être initialement évitée par un traitement préalable de passivation de la poudre, lorsque le bain est utilisé pendant une longue durée avec recharge, comme l'exige un processus industriel, on assiste à une dépassivation de la poudre et à une destruction du bain.

Le but de l'invention est de permettre un usage prolongé du bain de dépôt, compatible avec un processus industriel. L'invention vise notamment un procédé pour former un revêtement sur un substrat métallique, par dépôt chimique d'au moins un métal à partir d'ions de ce métal présents dans un bain autocatalytique contenu dans une cuve.

Selon l'invention, au moins la surface de la cuve en contact avec le bain est conductrice de l'électricité et est reliée au pôle positif d'une source de courant dont le pôle négatif est relié au substrat, et on règle l'intensité de la source de manière à maintenir à un niveau choisi la différence de potentiel entre le substrat et une électrode de référence plongée dans le bain.

L'invention est définie dans les revendications 1, 21 et 22. Certaines caractéristiques de l'invention, ou des caractéristiques optionnelles complémentaires ou alternatives, sont énoncées ci-après:

- Des particules sont présentes en suspension dans le bain et s'incluent dans le dépôt.

- Le diamètre desdites particules est inférieur à 15 $\mu$m.

- Lesdites particules sont formées d'un alliage de type MCrAlY.

- L'alliage de type MCrAlY contient du tantale.

- Le bain de dépôt est un bain de dépôt de nickel et l'élément M dans l'alliage de type MCrAlY comprend du cobalt.

- L'électrode de référence comprend un support recouvert d'un dépôt obtenu à partir dudit bain.

- Le support de l'électrode de référence est en un matériau conducteur de l'électricité et non corrodable dans le bain.

- On détermine la différence de potentiel entre le substrat et l'électrode de référence au moyen d'un voltmètre dont l'impédance d'entrée est au moins égale à $10^{12}$ $\Omega$.

- Ladite surface de la cuve est en un matériau conducteur de l'électricité et non corrodable dans le bain.

- On maintient le potentiel du substrat entre -1 V et 0 V par rapport à l'électrode de référence.

- On maintient le potentiel du substrat au voisinage de -0,2 V par rapport à l'électrode de référence.

- Le bain de dépôt est pratiquement exempt de composés du soufre.

- Le bain de dépôt est pratiquement exempt de composés du bore, du phosphore et du silicium.

- Le bain de dépôt est exempt de brillanteurs et de mouillants contenant du carbone.

- Le bain de dépôt est un bain de dépôt de nickel et/ou de cobalt.

- Le bain de dépôt contient de l'hydrazine comme réducteur.

- Le métal à déposer est introduit dans le bain sous forme d'un complexe d'un hydroxyde de ce métal et d'éthylène-diamine.

- Pendant le dépôt, on mesure l'intensité du courant circulant entre le substrat et la cuve.

- Pendant les périodes d'inactivité du bain, on polarise la cuve positivement par rapport à l'électrode de référence.

- L'opération de dépôt est suivie d'un traitement thermique sous atmosphère protectrice contre l'oxydation, propre à homogénéiser le revêtement.

- L'opération de dépôt est suivie d'un traitement thermique d'aluminisation.

L'invention a également pour objet un dispositif pour la mise en oeuvre du procédé tel que défini ci-dessus, comprenant une cuve présentant une surface interne conductrice de l'électricité, une électrode de référence, une source de courant réglable, des moyens pour contrôler la différence de potentiel entre le substrat et l'électrode de référence et éventuellement réguler la source de courant et la composition du bain, et éventuellement des moyens pour maintenir des particules en suspension dans un bain contenu dans la cuve.

L'invention porte en outre sur une pièce munie d'un revêtement d'un alliage de type MCrAlY dans lequel l'élément M comprend du nickel et/ou du cobalt, telle qu'on peut l'obtenir par le procédé ci-dessus, ayant une teneur en soufre dans le revêtement inférieure à 50 ppm.

La pièce selon l'invention peut comporter les particularités suivantes ou certaines d'entre elles:

- La teneur en soufre dans le revêtement est inférieure à 10 ppm.

- La teneur en soufre dans le revêtement ne dépasse pas 1 ppm environ.

- La teneur en l'un au moins des éléments B, P, Si et C dans le revêtement est inférieure à 50 ppm.

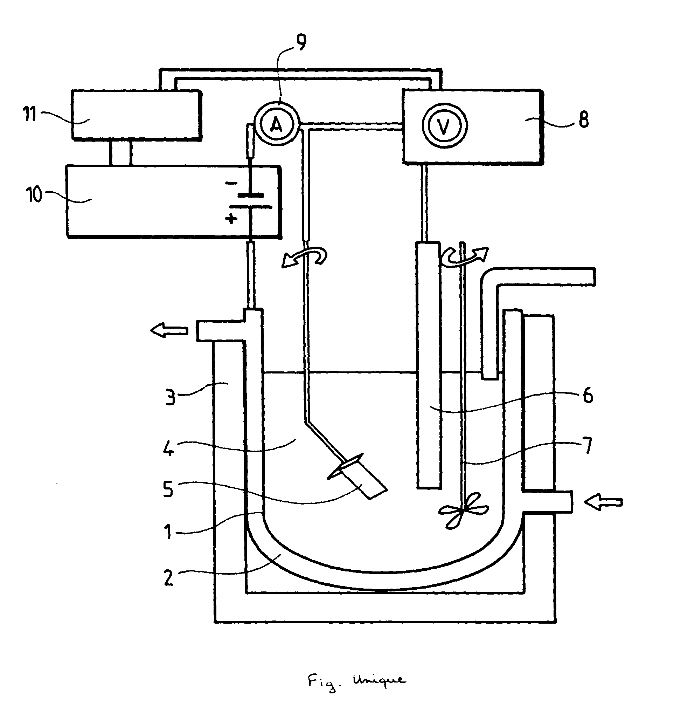

Les caractéristiques et avantages de l'invention seront exposés plus en détail dans la description ci-après, en se référant au dessin annexé, qui représente schématiquement une installation pour l'étape de dépôt du procédé selon l'invention.

Les dépôts métalliques par voie chimique autocatalytique fonctionnent sur le principe réducteur/métal à déposer. Si l'on trace, en l'absence du métal à réduire, une courbe intensité-potentiel pour décrire l'oxydation du réducteur dans la solution de dépôt et que, de la même manière, on trace la courbe intensité-potentiel, en l'absence du réducteur, de la réduction des cations métalliques dans le même milieu, on constate que les ordonnées de la courbe globale obtenue dans le bain contenant tous ses composants représentent la somme des ordonnées correspondantes des deux courbes intensité-potentiel. Enfin, si on modifie les concentrations des différentes espèces électroactives présentes dans le bain (réducteur et cation à réduire) et que l'on trace les courbes intensité-potentiel pour chaque modification, on constate que le potentiel mesure à $I = 0$ est invariant. C'est le potentiel redox du couple métal réduit / métal à réduire complexé dans le bain considéré. Puisque ce potentiel est stable dans ce bain, il constitue un potentiel de référence indépendant des concentrations, non nulles, des espèces électroactives dans le bain.

L'installation illustrée à titre d'exemple comprend une cuve 1 en un matériau conducteur de l'électricité et non corrodable par le bain de dépôt 4, par exemple en acier inoxydable 18/8, à fond arrondi munie d'une chemise 2 pour la circulation d'un fluide caloporteur, et d'une enveloppe thermiquement isolante 3. Dans le bain de dépôt 4 contenu dans la cuve sont plongés le substrat à revêtir 5, une électrode de référence 6 et un agitateur rotatif 7. L'électrode 6 comprend un support en un matériau conducteur de l'électricité et non corrodable par le bain 4, par exemple en tungstène ou plus avantageusement en acier inoxydable, recouvert d'un dépôt métallique de même nature que la matrice du dépôt à réaliser sur le substrat 5, c'est-à-dire résultant de la réduction des ions métalliques contenus dans le bain.

Un pH-mètre 8 joue le rôle de voltmètre à forte impédance d'entrée, son entrée protégée, c'est-à-dire celle reliée à la forte résistance, étant raccordée à l'électrode 6, tandis que son entrée reliée à la masse est raccordée au substrat 5. Ce dernier est également relié, par l'intermédiaire d'un ampèremètre 9, au pôle négatif d'une alimentation stabilisée en courant 10 piloté par un régulateur 11. Le pôle positif du générateur 10 est relié à la cuve 1.

L'installation illustrée permet d'obtenir un revêtement formé d'une matrice du métal résultant de la réduction des ions métalliques contenus dans le bain, dans laquelle sont enrobés des grains d'une poudre mise en suspension dans le bain.

Le procédé selon l'invention, bien que n'étant pas limité à des compositions particulières du substrat à revêtir et du revêtement à obtenir, est utilisable avantageusement pour la réalisation de revêtements d'alliage du type MCrAlY pratiquement exempts de soufre et d'autres impuretés gênantes sur des pièces de turbomachines en alliage à base de nickel destinées à travailler à des températures élevées. L'expression "du type MCrAlY" désigne un alliage composé principalement des éléments M (ce symbole représentant le nickel et/ou le cobalt et/ou le fer) , Cr, Al et Y, comprenant une phase dispersée de structure β dans une même matrice de structure γ. Des quantités mineures d'autres éléments, notamment Ta et Hf, peuvent y être incorporés.

Pour homogénéiser ce revêtement, l'invention prévoit un traitement thermique de recuit permettant l'interdiffusion des constituants. À l'échelle industrielle, il est avantageux d'effectuer ce recuit en atmosphère réductrice de manière à éviter toute oxydation de la pièce à traiter par de l'oxygène ou de la vapeur d'eau provenant d'éventuelles fuites. Un telle atmosphère réductrice peut être formée d'hydrogène optionnellement additionné d'un gaz inerte tel que l'argon dans la limite de 90 % en volume.

En outre, le revêtement peut avantageusement être soumis à un traitement d'aluminisation ou de chromaluminisation tel que ceux décrit dans FR 1 490 744 A, 2 094 258 A, 2 276 794 A et 2 638 174 A, destiné à renforcer la phase β de l'alliage de type MCrAlY. Un tel traitement peut être réalisé après ou avant le recuit mentionné ci-dessus. En variante, le traitement d'aluminisation peut être appliqué en atmosphère réductrice directement après le dépôt, la diffusion des atomes du revêtement étant réalisé pendant ce traitement. L'invention est davantage illustrée par les quelques exemples non limitatifs décrits ci-dessous.

EP 1 272 684 B1

Exemple 1

On se propose d'utiliser pour le dépôt de nickel-bore une solution commerciale connue sous le nom de NIBODUR et commercialisée par la société Schlötter. La préparation du bain consiste à diluer le concentré, à le porter à une température de 90 à 92 °C après avoir ajouté le "réducteur 1098" (hydruroborure ou borohydrure - de sodium, $NaBH_4$). Si la concentration de ce dernier est maintenue vers 0,3 g/l, la vitesse de dépôt sera comprise entre 20 et 25 $\mu$m. On recouvre ainsi une lame en acier inoxydable d'un dépôt d'environ 5 $\mu$m d'épaisseur de nickel-bore (cette épaisseur est nécessaire et suffisante pour n'avoir aucune percolation d'éventuelles porosités permettant au substrat d'être en contact avec la solution de dépôt). Parallèlement on construit une autre solution de nickel-bore NIBODUR dans une cuve en acier inoxydable 18/10. Cette solution est portée à 80 °C. On y introduit une pièce en matériau conducteur de l'électricité et reliée au pôle négatif d'une source de courant. La cuve quant à elle est reliée au pôle positif de la même source de courant. La lame d'acier précédemment revêtue d'un dépôt de nickel-bore est reliée à la pièce à recouvrir par l'intermédiaire d'un pH-mètre faisant office de voltmètre à haute impédance d'entrée. Cette lame d'acier revêtue nous servira d'électrode de référence en utilisant le potentiel redox $Ni/Ni(ED)_3^{2+}$ Ce potentiel est facile à calculer par rapport à l'électrode normale à hydrogène. Sachant que pour une concentration initiale en nickel de 0,14 M (soit 8 g/l de nickel), la concentration en Ni en présence d'éthylènediamine est de 2,8 x $10^{-15}$ M, le potentiel apparent (selon Nernst) est de -0,75 V/ENH (électrode normale à hydrogène). Après addition à cette solution de 0,1 g/l de borohydrure de sodium une légère activité apparaît (formation de bulles d'hydrogène) tant au niveau de l'électrode de référence qu'au niveau des pièces en cours de recouvrement. Les échantillons sont ensuite polarisés à -200 mV par rapport à l'électrode de référence, soit 0,95 V/ENH. On constate alors que l'activité au niveau des échantillons à recouvrir s'est largement accrue alors que celle de l'électrode de référence est restée constante. Le courant électrique qui traverse la cellule est de 100 mA environ pour une surface traiter d'environ 0,3 $dm^2$. La vitesse de dépôt obtenue est d'environ 20 pm/h, soit une vitesse de dépôt identique h celle obtenue dans des conditions "normales". Dès que cette surtension est enlevée, l'activité de dépôt chimique au niveau du substrat devient faible.

Cette opération montre qu'il est possible d'utiliser n'importe quel bain chimique dans des conditions de stabilité optimale à condition d'y définir une électrode de référence constituée d'un substrat sur lequel aura lieu une réaction de dépôt. Le potentiel de cette électrode sera dépendant du métal (ou de l'alliage) à déposer (Ni, Co, Pt, Pd, etc.), des complexants utilisés et de la nature du réducteur employé. Ces conditions définies, il est nécessaire et suffisant de diminuer la température de dépôt et la concentration en réducteur. La régulation de potentiel assure la cinétique de dépôt. Ce système est adaptable à tons les bains chimiques autocatalytiques à condition que le substrat soit conducteur de l'électricité.

Exemple 2

On fabrique une solution de nickel dérivée de celle décrite dans FR 2 590 595 A par la voie oxalate. Cette solution, appelée solution mère, est dosée à environ 44 g/l de nickel (0,75 M). Par dilution de cette solution on prépare une solution pour le dépôt de nickel chimique autocatalytique dont la composition est la suivante:

| hydroxyde de nickel-II-tri(éthylène diamine) | $Ni(H_2N(CH_2)_2NH_2)_3OH_2$ | 0,2 mol.$l^{-1}$ |
| hydroxyde de sodium | NaOH | 0,5 mol.$l^{-1}$ |
| pentoxyde d'arsenic | $As_2O_5$ | 6,5.$10^{-4}$ mol.$l^{-1}$ |
| imidazole | $N_2C_3H_4$ | 0,3 mol.$l^{-1}$. |

Cette solution est additionnée d'environ 50 g.$l^{-1}$ de poudre d'un alliage CoCrAlYTa présentant la composition pondérale suivante, dont le diamètre des grains est inférieur à 15 $\mu$m:

| Co | 39,3 % |
| Cr | 35,7 % |
| Al | 16,1 % |
| Ta | 7,8 % |
| Y | 1,1 %. |

Une pièce 5 en superalliage à base de nickel à revêtir est introduite dans la solution de dépôt 4 contenue dans la cuve 1 et portée à 80 °C en même temps qu'on y ajoute 10 ml.$l^{-1}$ d'hydrazine hydratée. Cet échantillon est ensuite porté à un potentiel de -200 mV/(Ni/Ni(HY)$_6^{2+}$), Ni/Ni(HY)$_6^{2+}$ représentant l'électrode de référence constituée par la lame 6 en acier inoxydable en cours de recouvrement par un dépôt chimique autocatalytique de nickel pur. Le potentiel normal de cette électrode par rapport à une électrode à hydrogène normale (EHN) est de -1,268 V/EHN. Le potentiel de dépôt est alors d'environ -1,5 V/EHN. À cet effet, le signal produit par le pH-mètre 8, représentant la différence de potentiel entre le substrat 5 et l'électrode 6, est envoyé au régulateur 11 qui règle la tension d'alimentation produite par le générateur 10 de manière à maintenir le potentiel du substrat à la valeur souhaitée. L'agitateur 7 assure l'homogénéisation du bain et le maintien en suspension de la poudre, la forme bombée du fond de la cuve évitant toute accumulation de poudre. La température du bain est quant à elle maintenue par une circulation de fluide chaud dans la chemise 2. Un dépôt composite est ainsi formé à la vitesse de 25 μm/h et contient 25 % en volume de CoCrAlYTa. Le courant circulant entre la pièce 5 et la cuve 1, mesuré au moyen de l'ampèremètre 9, donne une indication sur l'évolution de la composition du bain, qui peut être utilisée pour recharger celui-ci quand c'est nécessaire.

En variante, l'agitateur 7, lorsqu'il est en un matériau approprié, par exemple en acier inoxydable, peut jouer en outre le rôle d'électrode de référence, après avoir été revêtu d'un dépôt chimique autocatalytique, à partir du bain 4, ce qui dispense de l'utilisation de l'électrode 6 et simplifie le montage.

Par ailleurs, pendant les périodes de repos du bain, c'est-à-dire lorsqu'aucun substrat à revêtir n'y est immergé, l'électrode de référence peut servir à protéger la cuve 1 de dépôts de nickel parasites, en étant reliée au pôle négatif du générateur 10 à la place du substrat 5, la tension produite par le générateur étant par exemple de 1 volt.

La pièce revêtue est ensuite placée dans une boîte en nickel semi-étanche contenant des granulés d'un alliage de chrome et d'aluminium à 30 % en masse d'aluminium et du bifluorure d'ammonium (NH$_4$F, HF) à la concentration de 1 % en poids de la quantité d'alliage chrome-aluminium sans qu'il y ait contact entre le substrat à traiter et le cément. Après une purge à température ambiante de l'atmosphère de la boîte par de l'argon, l'ensemble est placé pendant 16 heures dans un four vertical porté à la température de 1050 °C et rempli d'une atmosphère d'hydrogène pur. À l'issue de ce traitement la pièce à protéger présente un revêtement d'épaisseur constante malgré une forme géométrique complexe. Le revêtement est un alliage NiCoCrAlYTa aluminisé, c'est-à-dire muni d'une couche superficielle de β-NiAl. Une analyse pratiquée sur ce revêtement montre que sa teneur en soufre est très réduite, de l'ordre de 1 ppm. Ses propriétés tant en oxydation qu'en corrosion à chaud en présence de phases condensées telles que le sulfate de sodium fondu sont excellentes, comme le montre un essai comportant 1000 cycles thermiques, l'échantillon étant exposé à une température de 1100 °C pendant une heure à chaque cycle.

Exemple 3

On reproduit l'étape de dépôt chimique telle que décrite dans l'exemple 2. La pièce revêtue est alors placée dans un cément donneur de l'aluminium ayant la composition pondérale suivante:

| Alumine | Al$_2$O$_3$ | 50 % |
|---|---|---|
| Chrome | Cr | 42,5 % |
| Aluminium | Al | 7,5 %, |

additionné de chlorure d'ammonium (NH$_4$Cl) à raison de 1 % de sa masse totale et contenu dans une boîte en nickel semi-étanche. Le tout est porté à la température de 1050 °C pendant 16 heures sous une atmosphère d'hydrogène pur. On obtient un revêtement présentant les mêmes caractéristiques que celles décrites à propos de l'exemple 2.

Exemple 4

On procède comme dans l'exemple 3, en modifiant toutefois la composition du cément et les conditions du traitement thermique de manière à remplacer l'aluminisation de basse activité par une aluminisation de haute activité. La composition pondérale du cément est la suivante:

| Alumine | Al$_2$O$_3$ | 50 % |
|---|---|---|
| Chrome | Cr | 32,5 % |
| Aluminium | Al | 17,5 %, |

avec ici encore 1 % de chlorure d'ammonium. La pièce revêtue immergée dans ce cément est portée à la température de 750 °C pendant 7 heures sous une atmosphère d'hydrogène pur. Après refroidissement un recuit d'homogénéisation est réalisé à 1085 °C sous hydrogène pendant 5 heures. On obtient un revêtement présentant les mêmes caractéristiques que celles décrites à propos de l'exemple 2.

Exemple 5

On reproduit l'étape de dépôt chimique telle que décrite dans l'exemple 2. La pièce revêtue subit ensuite le traitement décrit dans l'exemple 1 de FR 2 638 174 A comprenant a) le dépôt électrolytique d'un alliage palladium-nickel, b) un traitement thermique de diffusion de 2 heures à 850 °C sous vide et c) un traitement classique d'aluminisation de haute activité par cémentation activée en caisse avec post-diffusion. On obtient ainsi un revêtement d'alliage NiCoCrAlYTa renforcé par une aluminisation modifiée par le palladium, dont les propriétés de pureté et de tenue en oxydation et en corrosion à chaud sont telles que mentionné dans l'exemple 2. Il est possible en variante de renforcer le revêtement de MCrAlYTa par le platine et/ou le rhodium, par exemple grâce au traitement décrit dans US 3 999 956 A.

Exemple 6

On se propose de rénover un revêtement d'aluminiure sans ablation de l'ancien revêtement. Après décalaminage, le composant de partie chaude de turbomachine est désoxydé et désulfuré comme il est généralement pratiqué par l'homme de l'art. Après ces opérations le composant reçoit un prédépôt de nickel en milieu chlorhydrique (nickel de Wood) et, après les rinçages de rigueur, est traité comme dans l'exemple 2. On obtient un revêtement présentant les mêmes caractéristiques que celles décrites à propos de l'exemple 2.

Exemple 7

On se propose de réaliser un revêtement ayant une teneur en yttrium accrue. Pour ce faire on procède comme dans l'exemple 3 à ceci près qu'en plus des 50 g.l$^{-1}$ de poudre d'alliage CoCrAlYTa on met en suspension dans le bain 10 g.l$^{-1}$ de poudre d'yttrine ($Y_2O_3$) d'une granulométrie analogue. À l'issue du dépôt obtenu à la vitesse de 25 $\mu$m.h$^{-1}$, une coupe métallographique montre que les poudres sont incluses à l'intérieur du dépôt de nickel ultra-pur. L'échantillon est, à l'issue du dépôt chimique composite, recouvert par un dépôt d'alliage palladium-nickel épais d'environ 8 $\mu$m. L'ensemble est ensuite placé dans un four sous un vide meilleur que 10$^{-3}$ Pa et recuit pendant 2 heures à 850 °C. À l'issue de ce recuit l'échantillon est aluminisé à l'aide d'un cément dit de haute activité tel que décrit dans l'exemple 4. Après le recuit à 1085 °C nécessaire pour transformer la phase $\delta$-Ni$_2$Al$_3$ en $\beta$-NiAl, on obtient un revêtement NiCoCrAlYTa renforcé en palladium et en yttrium, dont les propriétés de pureté et de tenue en oxydation et en corrosion à chaud sont telles que mentionné dans l'exemple 2.

## Revendications

1. Procédé pour former un revêtement sur un substrat métallique (5), par dépôt chimique d'au moins un métal à partir d'ions dudit au moins un métal présents dans un bain autocatalytique (4), ledit bain comportant un réducteur, au moins un cation métallique en solution et au moins un stabilisant et étant contenu dans une cuve (1), dont au moins la surface en contact avec le bain est conductrice de l'électricité et est reliée au pôle positif d'une source (10) dont le pôle négatif est relié au substrat, procédé dans lequel des particules sont présentes en suspension dans le bain et s'incluent dans le dépôt, **caractérisé en ce qu'**on règle le courant de la source de manière à maintenir le potentiel du substrat (5) entre -1 V et 0 V par rapport au potentiel de référence d'une électrode de référence (6) qui a été préalablement recouverte dudit au moins un métal, lequel potentiel de référence est égal au potentiel redox du au moins un couple métal réduit/métal à réduire complexé dans le bain (4), ladite électrode de référence étant plongée dans ce dernier.

2. Procédé selon la revendication 1, dans lequel le diamètre desdites particules est inférieur à 15 $\mu$m.

3. Procédé selon l'une des revendications précédentes, dans lequel lesdites particules sont formées d'un alliage de type MCrAlY.

4. Procédé selon la revendication 3, dans lequel l'alliage de type MCrAlY contient du tantale.

5. Procédé selon l'une des revendications 3 et 4, dans lequel le bain de dépôt est un bain de dépôt de nickel et l'élément M dans l'alliage de type MCrAlY comprend du cobalt.

6. Procédé selon l'une des revendications précédentes, dans lequel l'électrode de référence comprend un support recouvert d'un dépôt obtenu à partir dudit bain.

7. Procédé selon la revendication 6, dans lequel le support de l'électrode de référence est en un matériau conducteur de l'électricité et non corrodable dans le bain.

8. Procédé selon l'une des revendications précédentes, dans lequel on détermine la différence de potentiel entre le substrat et l'électrode de référence au moyen d'un voltmètre (8) dont l'impédance d'entrée est au moins égale à $10^{12}$ Ω.

9. Procédé selon l'une des revendications précédentes, dans lequel ladite surface de la cuve est en un matériau conducteur de l'électricité et non corrodable dans le bain.

10. Procédé selon l'une des revendications précédentes, dans lequel on maintient le potentiel du substrat au voisinage de - 0,2 V par rapport à l'électrode de référence.

11. Procédé selon l'une des revendications précédentes, dans lequel le bain de dépôt est pratiquement exempt de composés du soufre.

12. Procédé selon l'une des revendications précédentes, dans lequel le bain de dépôt est pratiquement exempt de composés du bore, du phosphore et du silicium.

13. Procédé selon l'une des revendications précédentes, dans lequel le bain de dépôt est exempt de brillanteurs et de mouillants contenant du carbone.

14. Procédé selon l'une des revendications précédentes, dans lequel le bain de dépôt est un bain de dépôt de nickel et/ou de cobalt.

15. Procédé selon l'une des revendications précédentes, dans lequel le bain de dépôt contient de l'hydrazine comme réducteur.

16. Procédé selon l'une des revendications précédentes, dans lequel le métal à déposer est introduit dans le bain sous forme d'un complexe d'un hydroxyde de ce métal et d'éthylènediamine.

17. Procédé selon l'une des revendications précédentes, dans lequel, pendant le dépôt, on mesure l'intensité du courant circulant entre le substrat et la cuve.

18. Procédé selon l'une des revendications précédentes, dans lequel, pendant les périodes d'inactivité du bain, on polarise la cuve positivement par rapport à l'électrode de référence.

19. Procédé selon l'une des revendications précédentes, dans lequel l'opération de dépôt est suivie d'un traitement thermique sous atmosphère protectrice contre l'oxydation, propre à homogénéiser le revêtement.

20. Procédé selon l'une des revendications précédentes, dans lequel l'opération de dépôt est suivie d'un traitement thermique d'aluminisation.

21. Dispositif pour la mise en oeuvre du procédé selon l'une des revendications 1 à 18, comprenant une cuve (1) présentant une surface interne conductrice de l'électricité, une électrode de référence (6), une source réglable (10), des moyens pour contrôler la différence de potentiel entre le substrat et l'électrode de référence, **caractérisé en ce que** la source réglable est une source de courant apte à maintenir une différence de potentiel, comprise entre -1 V et 0 V entre le substrat et l'électrode de référence qui a été préalablement recouverte dudit au moins un métal.

22. Pièce munie d'un revêtement d'un alliage de type MCrAlY dans lequel l'élément M comprend du nickel et/ou du cobalt, telle qu'on peut l'obtenir par le procédé selon l'une des revendications 3 et 14, en combinaison avec la revendication 11, ayant une teneur en soufre dans le revêtement inférieure à 50 ppm.

23. Pièce selon la revendication 22, dans laquelle la teneur en soufre dans le revêtement est inférieure à 10 ppm.

24. Pièce selon la revendication 22, dans laquelle la teneur en soufre dans le revêtement ne dépasse pas 1 ppm environ.

25. Pièce selon l'une des revendications 22 à 24, dans laquelle la teneur en l'un au moins des éléments B, P, Si et C dans le revêtement est inférieure à 50 ppm.

**Claims**

1. A method of forming a coating on a metallic substrate (5) by chemical deposition of at least one metal from ions of the said at least one metal present in an autocatalytic bath (4), said bath comprising a reducing agent, at least one metallic cation in solution and at least one stabilizing agent and being contained in a vessel (1), at least the surface of the vessel in contact with the bath being electrically conductive and being connected to the positive pole of a current source (10), the negative pole of which is connected to the substrate, method wherein particles are present in suspension and are included in the deposit, **characterized in that** the intensity of the current source is adjusted so as to maintain the potential of the substrate (5) between -1 V and 0 V with respect to the reference potential of a reference electrode (6) which has been previously coated with the said at least one metal, which reference potential is equal to the redox potential of the at least one couple of reduced metal/metal to be reduced, complexed in the bath (4), said reference electrode (6) being immersed in the bath.

2. A method according to Claim 1, in which the diameter of the said particles is less than 15 $\mu$m.

3. A method according to one of the preceding Claims, wherein the said particles are formed of an alloy of the MCrAlY type.

4. A method according to Claim 3, wherein the alloy of the MCrAlY type contains tantalum.

5. A method according to Claim 3 or Claim 4, wherein the deposition bath is a bath for deposition of nickel, and the element M in the alloy of the MCrAlY type comprises cobalt.

6. A method according to one of the preceding Claims, wherein the reference electrode has a support coated with a deposit obtained from the said bath.

7. A method according to Claim 6, wherein the support of the reference electrode is of an electrically conductive material which is resistant to corrosion in the bath.

8. A method according to one of the preceding Claims, wherein the potential difference between the substrate and the reference electrode is determined by means of a voltmeter (8), the input impedance of which is at least equal to $10^{12}\Omega$.

9. A method according to one of the preceding Claims, wherein the said surface of the vessel is of an electrically conductive material which is resistant to corrosion in the bath.

10. A method according to one of the preceding Claims, wherein the potential of the substrate is maintained in the region of -0.2 V with respect to the reference electrode.

11. A method according to one of the preceding Claims, wherein the deposition bath is substantially free of sulphur compounds.

12. A method according to one of the preceding Claims, wherein the deposition bath is substantially free of compounds of boron, phosphorus, and silicon.

13. A method according to one of the preceding Claims, wherein the deposition bath is free of brighteners and wetting agents containing carbon.

14. A method according to one of the preceding Claims, wherein the deposition bath is a bath for deposition of nickel and/or cobalt.

15. A method according to one of the preceding Claims, wherein the deposition bath contains hydrazine as reducing agent.

16. A method according to one of the preceding Claims, wherein the metal to be deposited is introduced into the bath in the form of a complex of a hydroxide of the said metal and of ethylenediamine.

17. A method according to one of the preceding Claims, wherein, during the deposition operation, the intensity of the current flowing between the substrate and the vessel is measured.

18. A method according to one of the preceding Claims, wherein, during periods of inactivity of the bath, the vessel is positively polarised with respect to the reference electrode.

19. A method according to one of the preceding Claims, wherein the deposition operation is followed by a heat treatment in an atmosphere giving protection against oxidation, such as to render the coating homogeneous.

20. A method according to one of the preceding Claims, wherein the deposition operation is followed by a thermal aluminisation treatment.

21. Apparatus for performing the method according to one of Claims 1 to 18, comprising a vessel (1) having an electrically conductive internal surface, a reference electrode (6), an adjustable current source (10), means for controlling the potential difference between the substrate and the reference electrode, **characterized in that** the adjustable source is a current source capable of maintaining a potential difference, comprised between -1 V and 0 V, between the substrate and the reference electrode which has been previously coated with the said at least one metal.

22. A component having a coating of an alloy of the MCrAlY type wherein the element M consists of nickel and/or cobalt, such as can be obtained by the method of one of Claims 3 and 14, in combination with Claim 11, the component having a sulphur content in the coating which is less than 50 ppm.

23. A component according to Claim 22, wherein the sulphur content in the coating is less than 10 ppm.

24. A component according to Claim 22, wherein the sulphur content in the coating does not exceed about 1 ppm.

25. A component according to one of Claims 22 to 24, wherein the content of at least one of the elements B, P, Si and C in the coating is less than 50 ppm.

**Patentansprüche**

1. Verfahren zur Bildung einer Beschichtung auf einem metallischen Substrat (5) durch chemische Ablagerung wenigstens eines Metalls ausgehend von Ionen des wenigstens einen Metalls, die in einem autokatalytischen Bad (4) vorhanden sind, wobei das Bad einen Reduzierer, wenigstens ein metallisches Kation in Lösung und wenigstens einen Stabilisator aufweist, und enthalten ist in einem Behälter (1), von dem wenigstens die Oberfläche in Kontakt ist mit dem Bad und elektrisch leitend ist, und mit dem positiven Pol einer Quelle (10) verbunden ist, deren negativer Pol mit dem Substrat verbunden ist, Verfahren, bei dem Partikel in dem Bad in Lösung vorliegen und sich in dem Depot inkludieren, **dadurch gekennzeichnet, dass** der Strom der Quelle derart geregelt wird, dass das Potential des Substrats (5) zwischen -1 V und 0 V bezüglich des Referenzpotentials einer Referenzelektrode (6) gehalten wird, die vorher mit wenigstens einem Metall beschichtet wurde, wobei das Referenzpotential gleich dem Redoxpotential des wenigstens einen Paares reduziertes Metall / zu reduzierendes Metall ist, das in dem Bad (4) zusammengesetzt wird, wobei die Referenzelektrode in Letzteres eingetaucht ist.

2. Verfahren nach Anspruch 1, bei dem der Durchmesser der Partikel kleiner als 15 μm ist.

3. Verfahren nach einem der vorhergehenden Ansprüche, bei dem die Partikel aus einer Legierung vom Typ MCrAlY gebildet sind.

4. Verfahren nach Anspruch 3, bei dem die Legierung vom Typ MCrAlY Tantal enthält.

5. Verfahren nach Anspruch 3 oder 4, bei dem das Ablagerungsbad ein Nickelablagerungsbad ist und das Element M in der Legierung vom Typ MCrAlY Kobalt enthält.

6. Verfahren nach einem der vorhergehenden Ansprüche, bei dem die Referenzelektrode einen Träger aufweist, der von einer Beschichtung überzogen ist, die ausgehend von dem Bad erhalten wurde.

7. Verfahren nach Anspruch 6, bei dem der Träger der Referenzelektrode einen enthalten, der aus einem elektrisch leitenden Material gebildet ist, das in dem Bad nicht korrodierbar ist.

8. Verfahren nach einem der vorhergehenden Ansprüche, bei dem die Potentialdifferenz zwischen dem Substrat und der Referenzelektrode mittels eines Voltmeters (8) bestimmt wird, dessen Eingangsimpedanz wenigstens gleich $10^{12}$ Ω beträgt.

9. Verfahren nach einem der vorhergehenden Ansprüche, bei dem die Oberfläche des Behälters aus einem elektrisch leitenden und in dem Bad nicht korrodierbaren Material gebildet ist.

10. Verfahren nach einem der vorhergehenden Ansprüche, bei dem das Potential des Substrats in der Nähe von -0,2 V bezüglich der Referenzelektrode gehalten wird.

11. Verfahren nach einem der vorhergehenden Ansprüche, bei dem das Beschichtungsbad praktisch schwefelfrei ausgebildet ist.

12. Verfahren nach einem der vorhergehenden Ansprüche, bei dem das Beschichtungsbad praktisch frei ist von Komponenten Bor, Phosphor und Silizium.

13. Verfahren nach einem der vorhergehenden Ansprüche, bei dem das Beschichtungsbad frei von Glanzmittel und Befeuchtungsmitteln, die Kohlenstoff enthalten, ist.

14. Verfahren nach einem der vorhergehenden Ansprüche, bei dem das Beschichtungsbad ein Nickel- und/oder Kobalt-Beschichtungsbad ist.

15. Verfahren nach einem der vorhergehenden Ansprüche, bei dem das Beschichtungsbad Hydrazin als Reduktionsmittel enthält.

16. Verfahren nach einem der vorhergehenden Ansprüche, bei dem das zu beschichtende Material in das Bad in Form eines Hydroxidkomplexes dieses Metalls und des Ethylendiamins eingeführt wird.

17. Verfahren nach einem der vorhergehenden Ansprüche, bei dem während des Beschichtens die Intensität des zwischen dem Substrat und dem Behälter zirkulierenden Stromes gemessen wird.

18. Verfahren nach einem der vorhergehenden Ansprüche, bei dem während der Ruheperiode des Bades der Behälter positiv bezüglich der Referenzelektrode polarisiert wird.

19. Verfahren nach einem der vorhergehenden Ansprüche, bei dem der Vorgang des Beschichtens gefolgt wird von einer Wärmebehandlung unter Schutzgas gegen Oxidation, zur Homogenisierung der Beschichtung.

20. Verfahren nach einem der vorhergehenden Ansprüche, bei dem der Beschichtungsvorgang von einer Aluminisationswärmebehandlung gefolgt wird.

21. Vorrichtung zur Durchführung des Verfahrens nach einem der Ansprüche 1 bis 18, mit einem Behälter (1), der eine elektrisch leitende Oberfläche, eine Referenzelektrode (6), eine einstellbare Quelle (10), Einrichtungen zum Regeln des Potentialunterschieds zwischen dem Substrat und der Referenzelektrode aufweist, **dadurch gekennzeichnet, dass** die einstellbare Quelle eine Stromquelle ist, die in der Lage ist, eine Potentialdifferenz enthaltend zwischen -1 V und 0 V zwischen dem Substrat und der Referenzelektrode zu halten, die vorher mit dem wenigstens einen Metall beschichtet wurde.

22. Gegenstand, versehen mit einer Beschichtung einer Legierung vom Typ MCrAlY, bei dem das Element M Nickel und/oder Kobalt aufweist, derart, dass es durch das Verfahren nach einem der Ansprüche 3 bis 14 in Verbindung mit dem Anspruch 11, erhalten werden kann, wobei es einen Schwefelgehalt in der Beschichtung geringer als 50 ppm aufweist.

23. Gegenstand nach Anspruch 22, bei dem der Schwefelgehalt in der Beschichtung geringer als 10 ppm ist.

24. Gegenstand nach Anspruch 22, bei dem der Schwefelgehalt in der Beschichtung ca. 1 ppm nicht übersteigt.

**25.** Gegenstand nach einem der Ansprüche 22 bis 24, bei dem der Gehalt von wenigstens einem der Elemente B, P, Si und C in der Beschichtung geringer als 50 ppm ist.

EP 1 272 684 B1

Fig. Unique

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5698273 A
- US 4305792 A
- US 4810334 A
- US 5037513 A
- FR 2590595 A

- FR 1490744 A
- FR 2094258 A
- FR 2276794 A
- FR 2638174 A
- US 3999956 A